# EUROPEAN PATENT APPLICATION

(11) **EP 1 270 123 A1**
(43) Date of publication of application: **02.01.2003**
(21) Application number: 02013893.9
(22) Date of filing: 24.06.2002
(51) Int. Cl.: B23C 5/28, B23B 27/10, F28F 1/40

(54) **A tool provided with high-efficiency cooling ducts**

(30) Priority: 28.06.2001 IT MI20011366
(71) Applicant: Camozzi Holding S.P.A., I-25126 Brescia (IT)
(72) Inventor: Camozzi, Ettore, 25121 Brescia (IT)
(74) Representative: Faraggiana, Vittorio, Dr. Ing.

(57) **Abstract**

A chip-forming machining tool (10) comprises a path (15) for circulation of a cooling fluid at the inside thereof. The path comprises ducts with walls the surfaces of which extend in a non-linear course. In particular, the non-linear extension of the wall surfaces comprises sequences of grooves and/or ribs.

## Description

The present invention relates to a machining tool, in particular for high operating speeds, i.e. of the so-called HSM (High Speed Machining) type.

Due to the intrinsic performance of modern machine tools a great increase in the machining speeds, even to 2000-3000 m/min would be possible. Unfortunately, temperatures generated in normal tools due to such an increase in speed make it practically impossible to achieve these high speeds.

During chip-forming machining, the main source of heat is represented by sliding of the chip on the tool face and the heat-generating region is not limited to the sharp portion. Systems in which a jet of high-pressure lubricating/cooling fluid is sprayed on the cutting region, and tools internally provided with paths for the cooling fluid, have been both proposed.

As far as high-speed machining is concerned, the first solution, by effect of the centrifugal force, involves use of high-pressure pumps resulting in costs and critical conditions for a system that all in all is only of secondary importance in the machine tool operation. In addition, machining itself asks for great amounts of coolant and taking into account the involved flow rates it is very likely that important amounts of emulsifying agents and/or cutting fluids would be dispersed in the surrounding atmosphere. In addition the coolant jet cannot be applied in the field of composite materials due to incompatibility between oils and fibres.

Circulation of a cooling fluid within a tool obviates the problems of the above discussed solution, but usually suffers for a relatively low efficiency, also because the space inside the tool is relatively limited and therefore there are necessarily reduced flow rates.

It is a general aim of the present invention to obviate the above mentioned drawbacks by providing a chip-forming machining tool having an internal circulation of a cooling fluid enabling high cooling efficiency and therefore high machining speeds.

In view of the above aim in accordance with the invention a chip-forming machining tool has been conceived which internally comprises a path for coolant circulation characterised in that the path comprises ducts provided with walls the surfaces of which extend in a non-linear course.

For better explaining the innovative principles of the present invention and the advantages it offers over the known art, a possible embodiment applying said principles will be described hereinafter by way of example, with the aid of the accompanying drawings. In the drawings:
- Fig. 1 shows a tool made in accordance with the principles of the invention;
- Figs. 2 and 3 show two possible extensions of the surface of cooling ducts in the tool;
- Fig. 4 is a graph showing the temperature distribution on the tool.

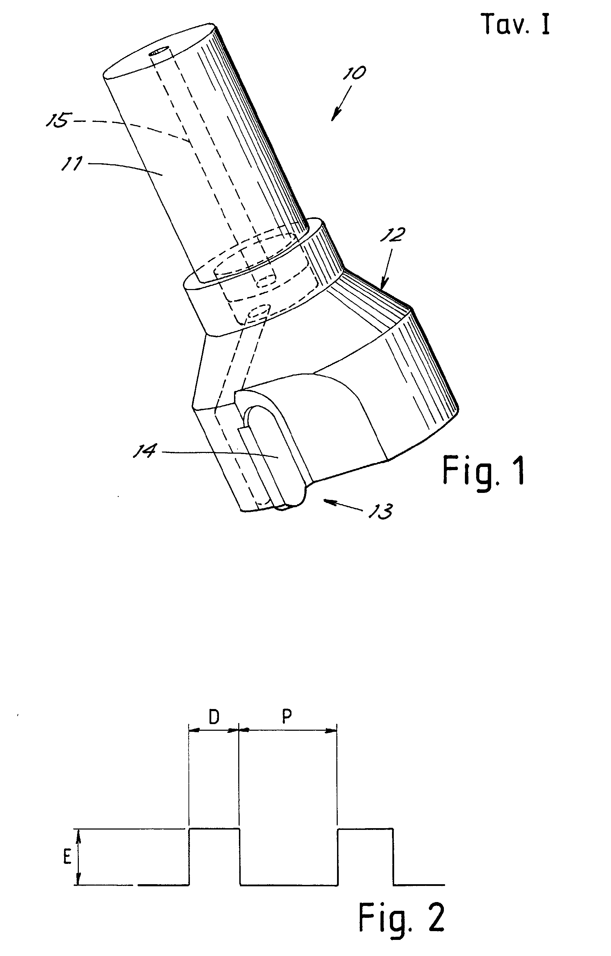

With reference to the drawings, an example of a chip-forming machining tool applying the principles of the present invention is shown in Fig. 1. The tool therein shown generally identified by 10, is of the rotating type. It comprises a shank 11 for mounting to the machine spindle, and a head 12 provided with a cutting edge 13. The cutting edge may possibly comprise an insert or bit 14 of hard material.

Within the tool there are paths 15 (diagrammatically shown in chain line) for circulation of a cooling fluid or coolant. Distribution of the ducts can substantially be that known for the different tool typologies.

In accordance with the invention, the paths for fluid circulation include ducts having walls the surface of which extends with a non linear course, in opposition to traditional ducts of the known art where walls are rectilinear with a linear course (for example a duct of circular section with smooth walls), i.e. without changing their course except obviously at the intersection points between two ducts.

It has been ascertained that ducts the walls of which have a non-linear course surprisingly increase efficiency in tool cooling. In detail, a grooved extension of the inner duct wall involving sequences of grooves, has been found particularly advantageous as a non-linear extension.

Assuming a linear grooved course, variables are height, length, inclination and section of the groove (or in a complementary equivalent manner, of the rib between two grooves).

The groove inclination (relative to the duct axis) can vary from a zero inclination (grooves parallel to the axis) to a transverse inclination (circumferential grooves or grooves transverse to the axis). Between the two end inclinations, the grooves have a helical extension around the axis.

Linking of the groove height to the duct diameter has been found advantageous, so that grooves are made of such a height that the ratio of the groove height to the duct diameter is at least as high as 0.02, preferably not less than 0.04. It has been found also advantageous that the upper limit of the ratio should not exceed 0.15 and preferably should not be higher than 0.1. A ratio range of 0.04 to 0.07 has been judged as a satisfactory one.

As regards distance between grooves, a ratio between the groove distance and the duct diameter has been also advantageously fixed. An advantageous ratio value is considered to be at least as high as 0.04, preferably not less than 0.08. Advantageously, the upper limit must not exceed 0.2, preferably it must not be higher than 0.1. A satisfactory ratio range is included between 0.08 and 0.09. The ratio of the groove width to the rib width may vary between 0.01 and 100. A ratio range of 0.1 to 10 is found particularly advantageous, the preferred value being in the neighbourhood of 1.

As regards section, a rectangular section and triangular section are considered as particularly advantageous. When the triangular section is contemplated, it is advantageous for the ribs to have a saw-tooth shape.

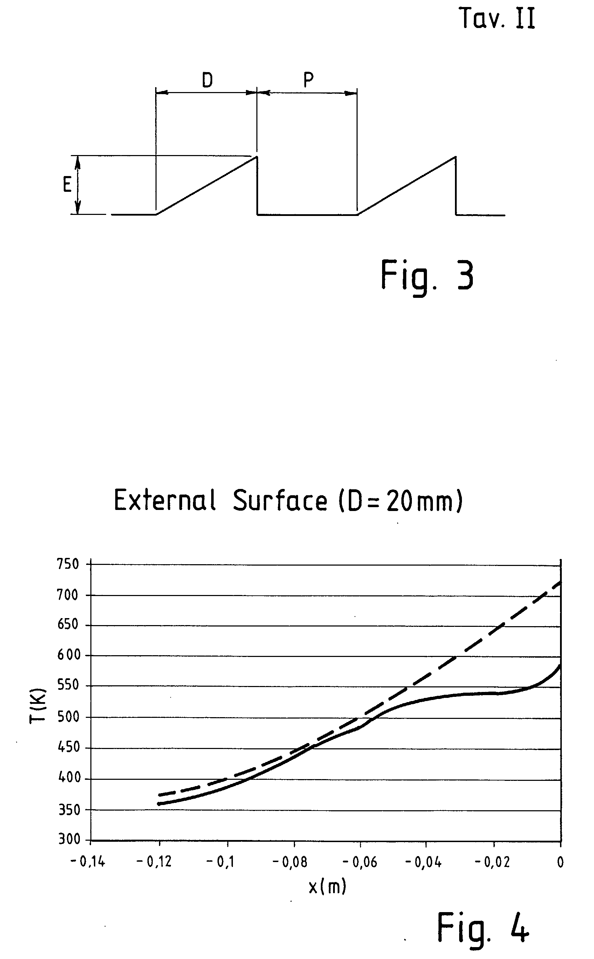

Shown in Figs. 2 and 3 is the profile of two preferred sections transverse to the grooves (of rectangular and saw-tooth shape) where some of the above mentioned parameters (E=height, D=rib width, P= rib distance) are marked.

On applying the principles of the invention it has been found that the surface temperature of the tool is reduced by 25-35%, the other conditions being the same, as compared with a similar tool provided with traditional smooth ducts. By way of example, reproduced in Fig. 4 is a graph showing the temperature distribution on the outer surface of a test tool of the cylindrical type with an axial duct, a 20 mm side length of the cutting edges engaged in machining, a rotation speed of 28000 rpm, a cooling flow of 12 l/mi of water, a 6 mm nominal duct diameter. Shown in Fig. 4 is the case of a tool having traditionally smooth ducts (curve in chain line) and ducts in accordance with the invention (curve in solid line). In the example the duct of the invention is of the type with merely axial grooves.

As can be seen, the maximum temperature (at x=0, i.e. the head extremity of the cutting edge) is 716 K in the first case and 536 K in the second case, with a reduction of 180 K and a less steep gradient.

It is clear that application of the inventive principles leads to really surprising results.

The efficiency increase is deemed to be particularly (even if not exclusively) due to the turbulence increase in the fluid flowing in the ducts made in accordance with the invention. A further element to be taken into account is the increase in the areas in contact with the fluid.

In addition to the efficiency increase in cooling, a second advantageous effect can be found. In fact it has been ascertained that with a duct in accordance with the invention (above all with circumferential ribs) the nominal diameter of the duct can be increased even to 25% of the tool diameter without impairing the structural resistance of the tool itself. Thus higher flow rates can be achieved, the feeding pressure being the same.

At this point it is apparent that the intended purposes are achieved. By means of the present solution the tool temperature can be reduced and the tool duration of life can be extended (which is important above all in the case of tools made of hard metal and/or coated tools).

In addition, the increased efficiency in cooling enables heat transmitted to the material to be greatly reduced, thereby ensuring a better quality of the end product. This is particularly important when machining involves materials (such as some aeronautics alloys or composite materials) sensitive to heat or the mechanical features of which would lower if submitted to an indiscriminate thermal treatment due to working.

With tools applying the principles of the invention an efficient cooling can be achieved using water without additives, which is useful above all in applications in which the absence of oils is advisable, for example.

Use of water alone also has important economic advantages and is useful for environmental protection. The concerned flow rates may be in the order of about 13 l/min at 4 bars. These tools also apply in the case of machining operations such as routing of composite materials under dry or semi-dry conditions.

By virtue of the high efficiency of cooling, with tools in which cooling is in accordance with the invention, high machining speeds can be reached, even in the order of 2000-3000 m/min. Thus efficient tools of the HSM type can be made.

The relatively simple geometric modification to the ducts as compared with traditional ducts, makes an increase in costs acceptable due to the accomplishment of ducts in accordance with the invention. In order to facilitate the tool manufacture, they can be made up of several parts machined with chip formation and/or by sintering of metal carbides or the like.

Obviously, the above description of an embodiment applying the innovative principles of the present invention is given by way of example only and therefore must not be considered as a limitation of the scope of the invention as herein claimed. For example, the ribs can be interrupted (so as to form separated fins along the duct, for example) or the duct lengths having surfaces with a course of non-linear variation may be distributed in the ducts, in accordance with specific cooling requirements of the different tool regions. The tool can be of a different type, and not necessarily a rotating tool. Several different duct paths can be provided depending on requirements.

## Claims

1. A chip-forming machining tool internally comprising a path for circulation of a cooling fluid, **characterised in that** the path comprises ducts having walls the surfaces of which extend with a non-linear course.

2. A tool as claimed in claim 1, **characterised in that** said surfaces for their extension with a non-linear course comprise sequences of grooves and/or ribs.

3. A tool as claimed in claim 2, **characterised in that** the grooves have a substantially linear extension.

4. A tool as claimed in claim 3, **characterised in that** the grooves extend in the duct surfaces with an inclination to the duct axis which is included between a direction parallel to the axis and a direction transverse to the axis.

5. A tool as claimed in claim 4, **characterised in that** the grooves extend circumferentially of the duct.

6. A tool as claimed in claim 2, **characterised in that** the ribs and/or grooves have a substantially rectangular section.

7. A groove as claimed in claim 2, **characterised in that** the ribs have a substantially saw-toothed section.

8. A tool as claimed in claim 2, **characterised in that** the ratio of the groove height to the duct width is at least as high as 0.02 and preferably not less than 0.04.

9. A tool as claimed in claim 2, **characterised in that** the ratio of the groove height to the duct width does not exceed 0.15 and preferably is not higher than 0.1.

10. A tool as claimed in claim 2, **characterised in that** the ratio of the rib distance to the duct width is at least as high as 0.04 and preferably not less than 0.08.

11. A tool as claimed in claim 2, **characterised in that** the ratio of the rib distance to the duct width does not exceed 0.2 and preferably is not higher than 0.1.

12. A tool as claimed in claim 2, **characterised in that** the ratio between the groove width and the rib width is included between 0.01 and 100 and, in particular, between 0.1 and 10.
